# EUROPÄISCHE PATENTANMELDUNG

(11) **EP 1 321 353 A1**
(43) Veröffentlichungstag der Anmeldung: **25.06.2003**
(21) Anmeldenummer: 02025447.0
(22) Anmeldetag: 15.11.2002
(51) Int. Cl.: B62D 25/20, B64D 11/06

(54) **Bodenverstärkung für Personenbeförderungsfahrzeuge**

(30) Priorität: 05.12.2001 DE 10159676
(71) Anmelder: Vogelsitze GmbH, 76228 Karlsruhe (DE)
(72) Erfinder: Bilfinger, Jan, 76228 Karlsruhe (DE)
(74) Vertreter: Dimmerling, Heinz, Dipl.-Ing.

(57) **Zusammenfassung**

Eine Bodenverstärkung für Personenbeförderungsfahrzeuge, insbesondere für Personenkraftwagen, welche Führungselemente 1 aufweist, welche der Längsverschiebung von Fahrgastsitzen dienen, ist dadurch gekennzeichnet, daß ein Formteil 2 vorhanden ist, in dem die Führungselemente 1 in einem vorbestimmten Abstand zueinander angeordnet sind.

## Beschreibung

Die Erfindung betrifft eine Bodenverstärkung nach dem Oberbegriff des Anspruches 1, für Personenbeförderungsfahrzeuge, insbesondere für Personenkraftwagen, welche Führungselemente aufweist, welche der Längsverschiebung von Fahrgastsitzen dienen.

Personenbeförderungsfahrzeuge haben regelmäßig aus Gründen der Gewichtseinsparung einen dünnen Blechboden, welcher zur Erreichung einer höheren Stabilität profiliert ist. Auf einem solchen Boden lassen sich zwar Fahrgastsitze fest anordnen, jedoch regelmäßig nicht in einer Weise, daß sie in Fahrtrichtung über größere Strekken längsverschieblich sind.

Es sind daher Aluminium-Bodenelemente entwickelt worden, welche sich in Fahrrichtung erstreckende Führungsschienen aufweisen, in denen die Fahrgastsitze über größere Strecken gleiten können. Die Bodenelemente weisen seitlich Schwalbenschwanzführungen auf, mittels welchen sie mit einem Abstandselement verbunden werden können. Das Abstandselement kann seinerseits ebenfalls mittels einer Schwalbenschwanzführung mit einem weiteren Abstandselement verbunden werden. Durch das Abstandselement beziehungsweise die Abstandselemente wird erreicht, daß zwei an beiden Längsseiten des Abstandselements mit dem Abstandselement mittels der Schwalbenschwanzführung verbundene Bodenelemente einen vorbestimmten Abstand zueinander aufweisen. Der vorbestimmte Abstand entspricht dem Abstand der Füße der Fahrgastsitze.

Damit der Boden des Kraftfahrzeugs keine Stufen aufweist, sondern als ebene Fläche ausgebildet ist, sind nicht nur zwischen zwei Bodenelementen Abstandselemente angeordnet, sondern auch außerhalb der Fläche zwischen den Bodenelementen. Hierzu werden die Abstandselemente mittels der Schwalbenschwanzführungen miteinander verbunden.

Da die Breite von Kraftfahrzeugen jedoch nicht einheitlich ist, ist der Abstand zwischen zwei nebeneinander angeordneten Sitzen sowie der Abstand zwischen einem Sitz und der Seitenwand des Kraftfahrzeuges regelmäßig nicht einheitlich. Somit läßt sich mit den bekannten Boden- und Abstandselementen der Boden eines Kraftfahrzeuges nicht lückenlos ausfüllen. Sofern der Abstand zwischen zwei nebeneinander angeordneten Fahrgastsitzen beziehungsweise der Abstand zwischen einem Fahrgastsitz und der Seitenwand des Kraftfahrzeuges nicht einem Vielfachen der Breite eines Bodenelements entspricht, entsteht eine Lücke im Boden beziehungsweise in der Bodenverstärkung. Dies ist sehr nachteilig, da diese Lücken sehr schlecht sauberzuhalten sind und darüber hinaus die Gefahr in sich bergen, daß sich etwas darin verklemmt. Je nach Größe der Lücke besteht darüber hinaus die Gefahr, daß ein Fahrgast sich den Fuß umknickt.

Die Ausbildung der bekannten Bodenelemente ist darüber hinaus recht aufwendig, was sich nachteilig auf die Herstellungskosten auswirkt. Des weiteren wirkt sich nachteilig auf die Kosten aus, daß die Abstandselemente ebenfalls aus einem Aluminiumprofil bestehen.

Es ist Aufgabe der Erfindung, eine eingangs genannte Bodenverstärkung derart auszubilden, daß sie preiswert herstellbar und hinsichtlich der mit ihr zu bedeckenden Fläche sehr variabel ist.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist eine Bodenverstärkung für Personenbeförderungsfahrzeuge, insbesondere für Personenkraftwagen, welche Führungselemente aufweist, welche der Längsverschiebung von Fahrgastsitzen dienen, dadurch gekennzeichnet, daß ein Formteil vorhanden ist, in dem die Führungselemente in einem vorbestimmten Abstand zueinander angeordnet sind.

Dadurch, daß die Führungselemente in einem Formteil angeordnet sind, wird einerseits auf sehr einfache und kostengünstige Weise erreicht, daß die Führungselemente in einem vorbestimmten Abstand zueinander angeordnet sind. Des weiteren wird durch das Formteil erreicht, daß der Abstand zwischen zwei Formteilen sehr variabel ist. Denn der Abstand zwischen zwei Formteilen hängt nicht mehr wie bisher von der Breite eines bestimmten Abstandselements ab, sondern ist frei wählbar. Hierdurch läßt sich der gesamte Boden eines Kraftfahrzeuges vollständig beispielsweise mit Verstärkungselementen belegen.

Besonders vorteilhaft ist es, wenn das Formteil aus Blech besteht. Hierdurch läßt sich das Formteil auf einfache Weise sehr preiswert herstellen.

Besonders vorteilhaft ist auch eine Ausführungsform der Erfindung, bei der das Formteil an zwei gegenüberliegenden Enden Verbindungselemente aufweist, welche in Wirkverbindung miteinander bringbar sind. Hierdurch ist es möglich, Formteile herzustellen, deren Länge so bemessen ist, daß sie gut handhabbar sind. Durch die Verbindungselemente lassen sich diese Formteile dann zu einer beliebig langen Formteilschiene verbinden. Die Formteilschiene kann auf einfache Weise exakt an die Länge eines Fahrzeugbodens angepaßt werden.

Besonders vorteilhaft ist es auch, wenn die Führungselemente aus einem Aluminiumprofil gebildet sind. Sind die Aluminiumprofile in dem Formteil angeordnet, ist eine Anordnung vorhanden, die dieselbe Funktion erfüllt, wie die bekannten Bodenelemente.

Besonders vorteilhaft ist es, wenn das Formteil Hervorstehungen aufweist, welche in einem solchen Abstand voneinander angeordnet sind, daß sie Umfassungen für die Führungselemente bilden. Durch die Hervorstehungen lassen sich insbesondere die aus einem Aluminiumprofil gebildeten Führungselemente auf einfache Weise in dem Formteil anordnen. Insbesondere kann durch die Hervorstehungen erreicht werden, daß die Führungselemente exakt parallel verlaufen.

Ebenfalls als ganz besonders vorteilhaft hat sich eine Ausführungsform der Erfindung herausgestellt, bei der das Formteil seitlich Auflageelemente aufweist, welche Mittel zur Befestigung einer Ausgleichsplatte aufweisen. Die Ausgleichsplatte, welche beispielsweise aus Holz bestehen kann, wird in ihrer Breite an den Abstand von zwei Formteilen angepaßt beziehungsweise an den Abstand eines Formteils von der Kraftfahrzeugwand, und dann auf die Auflageelemente aufgelegt und mit ihnen verbunden. Hierdurch entsteht ein sehr fest und stabil ausgebildeter Boden, welcher Schienen zur Längsverschiebung von Fahrgastsitzen aufweist.

In dem Raum zwischen den Führungselementen kann ebenfalls eine Platte angeordnet sein, wie dies bei einer weiteren besonderen Ausführungsform der Erfindung vorgesehen ist. Hierdurch ist der Boden des Kraftfahrzeuges vollständig mit Platten ausgelegt, welche mit Formteilen verbunden sind.

Weitere Einzelheiten der vorliegenden Erfindung ergeben sich aus der nachfolgenden Beschreibung eines besonderen Ausführungsbeispiels unter Bezugnahme auf die Zeichnung.

Es zeigt
- Figur 1: eine schematische Anordnung eines Ausschnitts einer erfindungsgemäßen Bodenverstärkung im Schnitt,
- Figur 2: ein Formteil mit lediglich einem Führungselement und
- Figur 3: zwei Formteile mit sich gegenüberstehenden Enden.

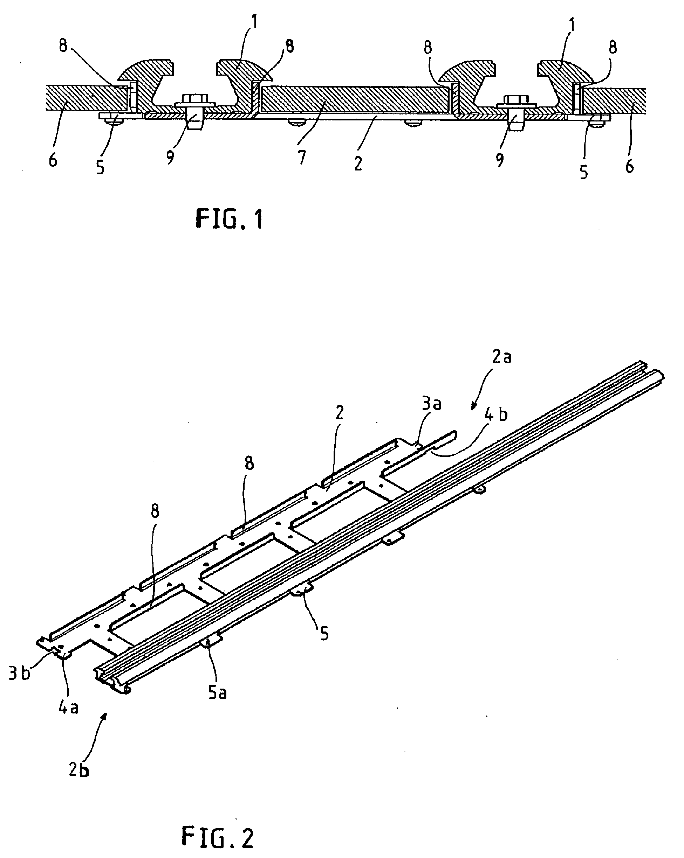

Wie Figur 1 entnommen werden kann, sind in einem aus Blech bestehenden Formteil 2 zwei aus einem Aluminium-Profil bestehende als Schienen ausgebildete Führungselemente 1 angeordnet. Die Führungselemente 1 sind zwischen Hervorstehungen 8 angeordnet, welche sie seitlich teilweise umfassen. Die Hervorstehungen 8 sind Stege, welche aus abgewinkelten Enden des Blechs bestehen. Die Führungselemente 1 sind mittels Schrauben 9 mit dem Formteil 2 verbunden.

An seinen beiden Seitenwänden weist das Formteil 2 Auflageelemente 5 auf, welche als Laschen ausgebildet sind. Wie insbesondere Figur 2 entnommen werden kann, weisen die Auflageelemente 5 Bohrungen 5a auf. Mittels der Bohrungen 5a lassen sich aus Holz bestehende Zwischenplatten 6 mit dem Formteil 2 verbinden. Die Länge des Formteils 2 beträgt etwa ein Meter.

Zwischen zwei Führungselementen 1 ist eine ebenfalls aus Holz bestehende Zwischenplatte 7 angeordnet, welche mit dem Formteil 2 verschraubt ist. Die Verschraubung der Ausgleichsplatten sowie der Zwischenplatte erfolgt mittels Holzschrauben.

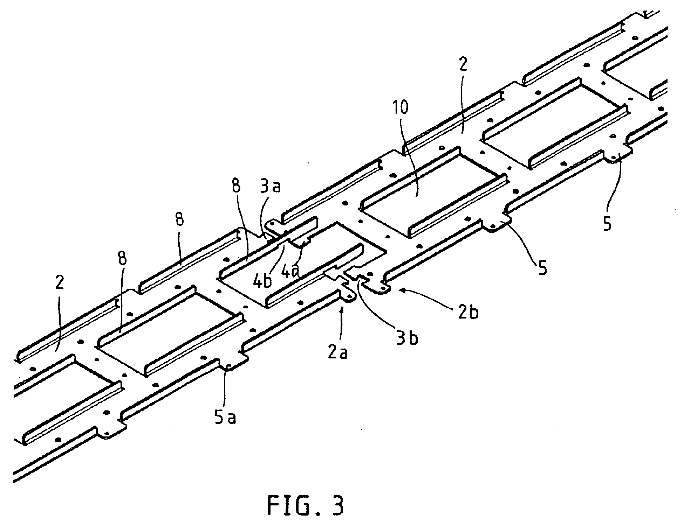

Wie insbesondere den Figuren 2 und 3 entnommen werden kann, weist das Formteil 2 an zwei gegenüberliegenden Enden 2a, 2b Verbindungselemente 3a, 3b, 4a, 4b auf, mittels der zwei Formteile 2 miteinander verbunden werden können. Bei den ersten Verbindungselementen 3a, 3b handelt es sich um einen schwalbenschwanzförmigen Steg 3a sowie eine schwalbenschwanzförmige Ausnehmung 3b, welche miteinander in Eingriff bringbar sind. Bei den zweiten Verbindungselementen 4a, 4b handelt es sich um eine rechteckförmige Ausnehmung 4b in einer Hervorstehung 8. Entsprechend der Ausnehmung 4b ist an dem gegenüberliegenden Ende 2b des Formteils 2 ein Steg 4a ausgebildet, welcher mit der Ausnehmung 4b korrespondiert. Mittels der Verbindungselemente 3a, 3b, 4a, 4b lassen sich zwei Formteile 2 fest und zuverlässig miteinander verbinden.

Durch die gewählte Form der Verbindungselemente 3a, 3b, 4a, 4b wird des weiteren in vorteilhafter Weise erreicht, daß der Verschnitt beim Ausschneiden der Formteile 2 beispielsweise mittels eines Lasers aus einer Blechplatte äußerst gering ist.

Das Formteil 2 weist Ausnehmungen 10 auf, durch welche sich das Gewicht des Formteils 2 verringert.

## Patentansprüche

1. Bodenverstärkung für Personenbeförderungsfahrzeuge, insbesondere für Personenkraftwagen, welche Führungselemente (1) aufweist, welche der Längsverschiebung von Fahrgastsitzen dienen,
**dadurch gekennzeichnet,**
**daß** ein Formteil (2) vorhanden ist, in dem die Führungselemente (1) in einem vorbestimmten Abstand zueinander angeordnet sind.

2. Bodenverstärkung nach Anspruch 1,
**dadurch gekennzeichnet,**
**daß** das Formteil (2) aus Blech besteht.

3. Bodenverstärkung nach Anspruch 1 oder 2,
**dadurch gekennzeichnet,**
**daß** das Formteil (2) an zwei gegenüberliegenden Enden (2a, 2b) Verbindungselemente (3a, 3b, 4a, 4b) aufweist, welche in Wirkverbindung miteinander bringbar sind.

4. Bodenverstärkung nach einem der Ansprüche 1 bis 3,
**dadurch gekennzeichnet,**
**daß** die Führungselemente (1) aus einem Aluminium-Profil gebildet sind.

5. Bodenverstärkung nach einem der Ansprüche 1 bis 4,
**dadurch gekennzeichnet,**
**daß** das Formteil (2) Vorstehungen (8) aufweist, welche in einem solchen Abstand voneinander angeordnet sind, daß sie Umfassungen für die Führungselemente (1) bilden.

6. Bodenverstärkung nach einem der Ansprüche 1 bis 5,
**dadurch gekennzeichnet,**
**daß** das Formteil (2) seitlich Auflageelemente (5) aufweist, welche Mittel (5a) zur Befestigung einer Ausgleichsplatte (6) aufweisen.

7. Bodenverstärkung nach einem der Ansprüche 1 bis 6,
**dadurch gekennzeichnet,**
**daß** zwischen den Führungselementen (1) eine Zwischenplatte (7) angeordnet ist.
